# FASCICULE DE BREVET EUROPEEN

(11) **EP 0 669 481 B1**
(45) Date de publication et mention de la délivrance du brevet: **18.10.2000**
(21) Numéro de dépôt: 95400393.5
(22) Date de dépôt: 24.02.1995
(51) Int. Cl.: F16D 66/02

(54) **Système de détection d'usure de garniture de friction de frein à disque ou à tambour**
System zum Erfassen des Verschleisses des Reibbelages einer Scheiben- oder Trommelbremse
System for detecting wear of friction pad of disk or drum brake

(30) Priorité: 25.02.1994 FR 9402172
(43) Date de publication de la demande: 30.08.1995
(73) Titulaire: COMPAGNIE PLASTIC OMNIUM, 69007 Lyon (FR)
(72) Inventeur: Schosseler, René, F-95100 Argenteuil (FR)
(74) Mandataire: Leszczynski, André

(56) Documents cités:
- DE-U- 9 010 354
- DE-U- 9 215 810
- FR-A- 2 366 489
- FR-A- 2 485 133
- GB-A- 2 058 968

## Description

La présente invention concerne un système de détection d'usure de garniture de friction de frein à disque ou à tambour.

Sur un véhicule automobile, il est connu d'installer un témoin d'usure de garniture de friction sur chacune des deux plaquettes de frein de chaque roue du véhicule, voir par exemple FR-A-2 366 489.

Chaque témoin d'usure est électriquement relié à un indicateur d'alerte, qui est en général un témoin lumineux présent sur le tableau de bord du véhicule, par un câble électrique qui se situe dans le faisceau électrique général du véhicule.

Ce type de câble électrique est relativement coûteux du fait qu'il doit notamment pouvoir résister à d'importantes élévations de température, au moins dans sa partie voisine de la garniture de friction.

Il en résulte un prix élevé des systèmes de détection d'usure connus.

La présente invention vise à fournir un système de détection d'usure simple et plus économique que les systèmes de détection d'usure connus.

La présente invention a pour objet un système de détection d'usure de garniture de friction de frein à disque ou à tambour d'un véhicule automobile, caractérisé par le fait qu'il comporte :
- au moins deux témoins d'usure de garniture de friction du type constitué par un embout isolant en matière plastique creux, comportant une cavité intérieure pour recevoir l'extrémité d'un câble électrique, et apte à s'user pour réaliser un contact électrique entre ledit câble et le disque ou le tambour du frein,
- un premier câble électrique reliant électriquement les deux témoins d'usure,
- un unique indicateur d'alerte, et
- un second câble électrique connecté au premier câble électrique et s'étendant jusqu'à un branchement vers l'indicateur d'alerte.

Le système de détection d'usure selon l'invention est particulièrement économique dans la mesure où il permet de réduire considérablement la longueur de câble nécessaire pour raccorder les témoins d'usure à l'indicateur d'alerte.

En effet, dans le système selon l'invention, seul le second câble électrique emprunte le faisceau électrique général du véhicule, le premier câble électrique étant localisé autour de la roue correspondante du véhicule.

En d'autres termes, la paire de témoins d'usure est reliée à l'indicateur d'alerte à l'aide d'une seule longueur de câble électrique passant par le faisceau électrique général.

Le système de détection d'usure de la présente invention est adapté aussi bien à des freins à disques qu'à des freins à tambour.

Dans le cas de frein à disque, un témoin d'usure est installé sur une plaquette de frein, de chaque côté du disque de frottement, et le premier câble électrique selon l'invention présente une longueur suffisante pour contourner le disque de frottement.

Dans un premier mode de réalisation de l'invention, le système de détection d'usure comporte un témoin d'usure qui permet de connecter ledit second câble électrique audit premier câble électrique.

Dans une première variante de ce mode de réalisation, le témoin d'usure comporte un embout isolant apte à recevoir les extrémités du premier et du second câbles électriques, lesdites extrémités étant conjointement reliées à un contact électrique s'étendant à l'intérieur de l'embout isolant.

Dans une seconde variante de ce mode de réalisation, le témoin d'usure se présente sous la forme d'un embout isolant comportant intérieurement un canal en forme de U qui débouche à l'extérieur par deux orifices situés sur une même face de l'embout, ce canal étant apte à recevoir un câble électrique qui pénètre dans l'embout par l'un des orifices et en ressort par l'autre orifice.

Selon cette variante, le premier et le second câbles électriques au sens de l'invention sont constitués par un seul et même câble électrique dont une branche constitue le premier câble électrique qui relie électriquement les deux témoins d'usure et dont l'autre branche constitue le second câble électrique qui s'étend jusqu'au branchement vers l'indicateur d'alerte.

Selon un second mode de réalisation de l'invention, le système de détection d'usure comporte un dispositif de raccordement entre le premier et le second câbles électriques qui se présente sous la forme d'un manchon isolant qui recouvre un tronçon dénudé dudit premier câble électrique, maintenu en contact électrique avec l'extrémité dénudée du second câble électrique.

Ce contact électrique peut être assuré par sertissage, par soudure ou par étamage des premier et second câbles électriques dans leur partie dénudée.

Dans une variante préférée de ce mode de réalisation, le manchon isolant est surmoulé sur les parties dénudées du premier et du second câbles électriques.

Dans une autre variante, le manchon est composé de deux demi-coquilles qui viennent se refermer sur les parties dénudées des premier et second câbles électriques, en étant réunies par exemple par soudage aux ultrasons.

Dans le but de mieux faire comprendre l'invention, on va en décrire maintenant plusieurs modes de réalisation donnés à titre d'exemples non limitatifs en référence au dessin annexé dans lequel :
- la figure 1 représente schématiquement quatre systèmes de détection d'usure selon un premier mode de réalisation de l'invention, installés sur un véhicule automobile,
- la figure 2 est une vue en coupe d'une première variante de témoin d'usure utilisable dans les systèmes de détection d'usure de la figure 1,
- la figure 3 est une vue en perspective d'une seconde variante de témoin d'usure utilisable dans les systèmes de détection d'usure de la figure 1,
- la figure 4 représente schématiquement l'agencement d'un câble électrique dans le cas d'une utilisation du témoin d'usure de la figure 3, et
- la figure 5 est une vue en coupe d'un dispositif de raccordement d'un système de détection d'usure selon un second mode de réalisation de l'invention.

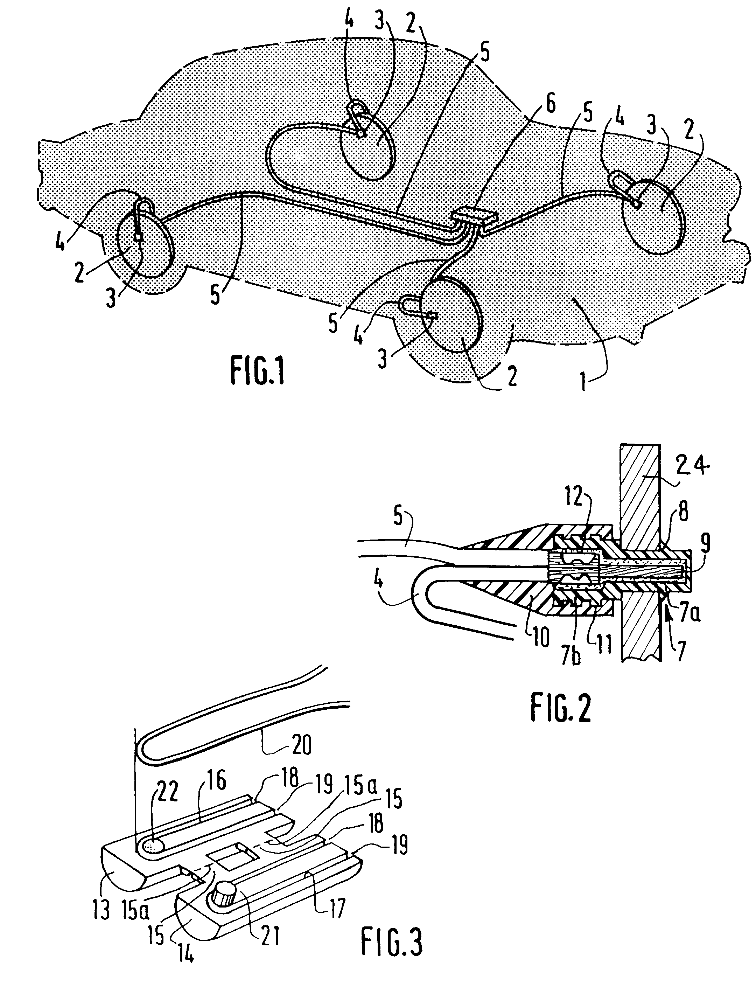

Sur la figure 1, on a représenté, schématiquement et en traits interrompus, un véhicule automobile 1 dont les quatre roues sont munies de freins à disques.

Chaque disque de frottement 2 se situe entre les mâchoires d'un système de freinage, non représenté.

Un témoin d'usure 3 étant prévu sur chaque plaquette de frein, chaque roue du véhicule est équipée d'une paire de témoins d'usure 3.

Conformément à l'invention, deux témoins d'usure 3 d'une même paire sont reliés par un premier câble électrique 4, de longueur suffisante pour contourner le disque de frottement 2, un second câble électrique 5 étant connecté au premier câble électrique 4 et s'étendant jusqu'à un boîtier de raccordement 6.

L'ensemble formé par la paire de témoins d'usure 3 et par les deux câbles électriques 4 et 5 constitue un système de détection d'usure selon l'invention.

Du boîtier 6 partent des liaisons électriques, non représentées, vers le tableau de bord, non représenté, du véhicule où se situe un indicateur d'alerte.

Dans l'exemple illustré à la figure 1, le second câble électrique est connecté au premier câble électrique à l'aide de l'un des témoins d'usure 3.

La figure 2 représente en coupe un premier exemple d'un tel témoin d'usure permettant de connecter le premier et le second câbles électriques.

Ce témoin d'usure est prévu pour être inséré à l'intérieur d'un orifice prévu à cet effet dans une plaquette de frein 24.

Il est constitué par un embout en matière plastique 7 sensiblement cylindrique et creux.

L'embout 7 comporte, à la manière connue, une partie avant 7a de petit diamètre et une partie arrière 7b de grand diamètre.

La partie 7a comporte un épaulement circulaire 8, permettant d'immobiliser l'embout 7 dans l'orifice de la plaquette de frein 24.

Un contact électrique 9 se trouve dans la cavité intérieure de l'embout 7. Ce contact 9 comporte une partie avant cylindrique destinée à entrer en contact avec le disque de frottement en cas d'usure importante de la garniture et une partie arrière en forme de pince.

Grâce aux dimensions appropriées de cette partie arrière, les extrémités dénudées des deux câbles électriques 4 et 5 peuvent être serties ensemble dans le témoin d'usure.

Un manchon 10, de préférence surmoulé, vient coiffer la partie arrière 7b de l'embout 7 sur lequel il est ancré par des anneaux.

Une colle 12 assure le maintien en position du manchon 10 sur l'embout 7, ainsi que l'étanchéité entre l'intérieur de l'embout 7 et le milieu extérieur.

Sur la figure 3, on a représenté un autre exemple de témoin d'usure qui permet également de connecter ensemble un premier et un second câbles électriques.

Un tel témoin d'usure est connu dans une autre application qui concerne la détection d'usure avec un système bifilaire qui permet, moyennant un branchement électrique particulier, d'avertir de l'état d'usure avancée des garnitures de friction même lorsque les freins ne sont pas sollicités.

Ce témoin d'usure se présente sous la forme de deux demi-coquilles de forme semi-cylindrique 13 et 14, qui sont reliées entre elles par des languettes 15 susceptibles de plier dans leur zone de plus faible épaisseur 15a pour permettre le rapprochement face plane contre face plane des deux demi-coquilles 13 et 14.

Chaque demi-coquille comporte une rainure en forme de U 16, 17.

Lorsque les deux demi-coquilles 13 et 14 sont assemblées avec leurs faces planes l'une contre l'autre, les rainures 16, 17 forment un canal en forme de U dont les deux extrémités 18, 19 débouchent sur la face arrière du témoin d'usure.

Grâce à un tel témoin d'usure, il n'est pas nécessaire d'utiliser deux câbles électriques différents pour réaliser le premier et le second câbles électriques au sens de l'invention.

En effet, il suffit de placer un tronçon d'un câble électrique 20 dans la rainure 17, la partie courbée du câble 20 étant maintenue par un pion 21 prévu sur la demi-coquille 14, puis de refermer la demi-coquille 13 sur la demi-coquille 14, le pion 21 pénétrant dans un orifice correspondant 22 prévu sur la demi-coquille 13.

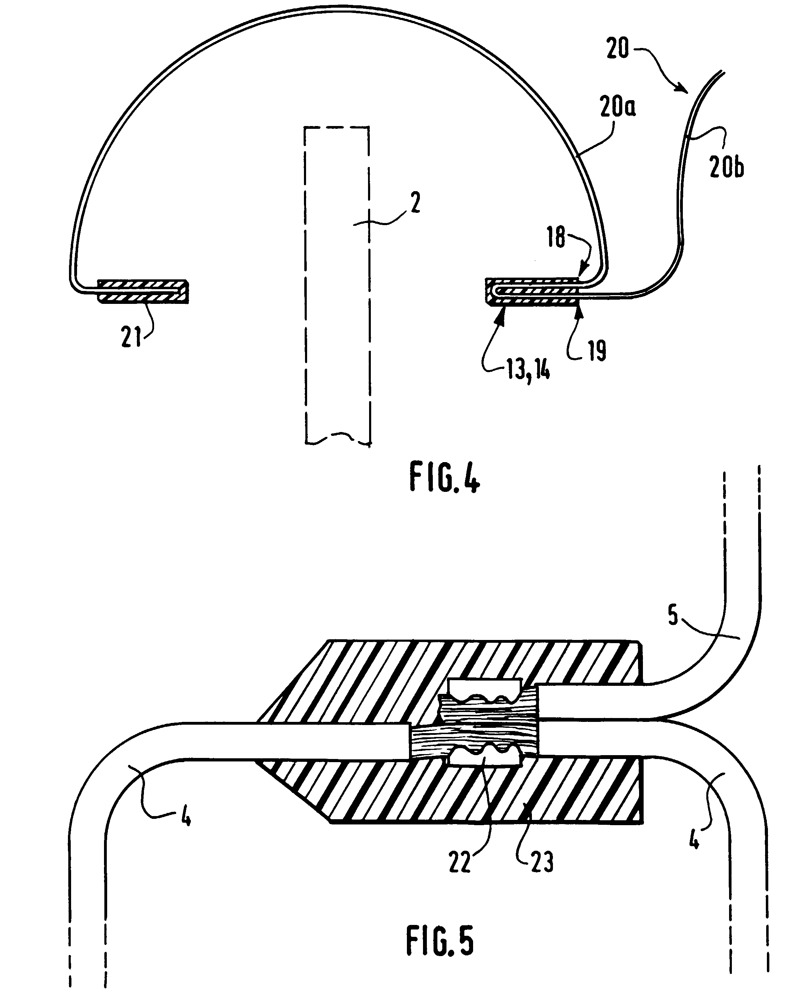

On obtient ainsi, comme on le voit sur la figure 4, deux branches 20a et 20b du câble 20 qui quittent le témoin d'usure par les orifices 18 et 19 et constituent respectivement le premier et le second câbles électriques au sens de l'invention.

L'extrémité de la branche 20a du câble aboutit à un témoin d'usure traditionnel 21, représenté schématiquement sur la figure 4, tandis que l'extrémité de l'autre branche 20b peut emprunter le faisceau électrique général du véhicule.

Sur la figure 5, on a représenté un dispositif de raccordement entre le premier et le second câbles électriques d'un système de détection d'usure selon un second mode de réalisation de l'invention.

Ce dispositif de raccordement est constitué par une pince métallique 22 qui est sertie sur un tronçon dénudé du premier câble électrique 4 et sur l'extrémité dénudée du second câble électrique 5.

Un manchon en matière plastique 23 est ensuite surmoulé sur la pince 22 de manière à assurer l'étanchéité de la connexion vis-à-vis du milieu extérieur.

Un tel dispositif de raccordement permet d'avoir recours à des témoins d'usure traditionnels à chacune des extrémités du premier câble électrique 4.

Il est bien entendu que les modes de réalisation qui viennent d'être décrits ne présentent aucun caractère limitatif et qu'ils pourront recevoir toutes modifications désirables sans sortir pour cela du cadre de l'invention.

En particulier, bien que les modes de réalisation aient été illustrés en relation avec un véhicule automobile, le système de détection selon l'invention peut être utilisé sur un frein à disque ou à tambour équipant n'importe quel arbre rotatif.

## Revendications

1. Système de détection d'usure de garniture de friction de frein à disque (2) ou à tambour d'un véhicule automobile (1) comportant
- au moins deux témoins d'usure (3 ; 21) de garniture de friction du type constitué par un embout isolant (7 ; 13,14) en matière plastique creux, comportant une cavité intérieure pour recevoir l'extrémité d'un câble électrique (4 ; 20a) et apte à s'user pour réaliser un contact électrique entre ledit câble (4 ; 20a) et le disque (2) ou le tambour du frein,
- un premier câble électrique (4 ; 20a) reliant électriquement les deux témoins d'usure (3 ; 21),
- un unique indicateur d'alerte et
- un second câble électrique (5 ; 20b) connecté au premier câble électrique (4 ; 20a) et s'étendant jusqu'à un branchement (6) vers l'indicateur d'alerte.

2. Système de détection d'usure de garnitures de friction de frein selon la revendication 1, caractérisé par le fait qu'il comporte une paire de témoins d'usure (3) adaptés pour être installés chacun sur une garniture de friction, de part et d'autre d'un disque de frottement (2), le premier câble électrique (4) présentant une longueur suffisante pour contourner le disque de frottement (2).

3. Système de détection d'usure selon l'une quelconque des revendications 1 et 2, caractérisé par le fait qu'il comporte un témoin d'usure (3) qui permet de connecter ledit second câble électrique (5) audit premier câble électrique (4).

4. Système de détection d'usure selon la revendication 3, caractérisé par le fait que ledit témoin d'usure (3) comporte un embout isolant (7) apte à recevoir les extrémités du premier (4) et du second (5) câbles électriques, conjointement reliées à un contact électrique (9) s'étendant à l'intérieur de l'embout isolant (7).

5. Système de détection d'usure selon la revendication 3, caractérisé par le fait que ledit témoin d'usure (3) se présente sous la forme d'un embout isolant comportant intérieurement un canal en forme de U (16,17) qui débouche à l'extérieur par deux orifices (18,19) situés sur une même face de l'embout, ce canal (16,17) étant apte à recevoir un câble électrique (20) qui pénètre dans l'embout par l'un des orifices (18) et en ressort par l'autre orifice (19).

6. Système de détection d'usure selon l'une quelconque des revendications 1 et 2, caractérisé par le fait qu'il comporte un dispositif de raccordement entre le premier et le second câbles électriques, qui se présente sous la forme d'un manchon isolant (23) recouvrant un tronçon dénudé du premier câble électrique (4), maintenu en contact élastique avec l'extrémité dénudée du second câble électrique (5).

7. Système de détection d'usure selon la revendication 6, caractérisé par le fait que le manchon isolant (23) est surmoulé sur les parties dénudées du premier et du second câbles électriques (4).

## Patentansprüche

1. System zum Erfassen des Verschleißes des Reibbelages einer Scheiben- oder Trommelbremse eines Kraftfahrzeugs (1), mit :
- wenigstens zwei Reibbelag-Verschleißfühlern (3; 21) des Typs, der gebildet wird durch ein isolierendes hohles Endstück (7; 13, 14) aus Kunststoff, das einen inneren Hohlraum zur Aufnahme des Endes eines elektrischen Kabels (4; 20a) aufweist und sich verschleißen kann, um einen elektrischen Kontakt zwischen dem genannten Kabel (4; 20a) und der Scheibe (2) oder der Trommel der Bremse herzustellen,
- einem ersten elektrischen Kabel (4; 20a), das die beiden Verschleißfühler (3; 21) elektrisch miteinander verbindet,
- einem einzigen Warnsignalgeber und
- einem zweiten elektrischen Kabel (5; 20b), das an das erste elektrische Kabel (4; 20a) angeschlossen ist und sich bis zu einem Verzweigungspunkt (6) zum Warnsignalgeber erstreckt.

2. System zur Erfassung des Verschleißes des Reibbelages einer Bremse nach Anspruch 1, dadurch **gekennzeichnet**, daß es zwei Verschleißfühler (3) aufweist, die dazu ausgebildet sind, jeweils an einem Reibbelag auf beiden Seiten einer Bremsscheibe (2) installiert zu werden, wobei das erste elektrische Kabel (4) eine ausreichende Länge aufweist, um die Bremsscheibe (2) zu umgehen.

3. System zur Erfassung des Verschleißes nach einem der Ansprüche 1 und 2, dadurch **gekennzeichnet**, daß es einen Verschleißfühler (3) aufweist, der es gestattet, das genannte zweite elektrische Kabel (5) mit dem genannten ersten elektrischen Kabel (4) zu verbinden.

4. System zur Erfassung des Verschleißes nach Anspruch 3, dadurch **gekennzeichnet**, daß der Verschleißfühler (3) ein isolierendes Endstück (7) aufweist, das dazu ausgebildet ist, die Enden des ersten (4) und des zweiten elektrischen Kabels (5) aufzunehmen, die gemeinsam mit einem elektrischen Kontakt (9) verbunden sind, der sich in das Innere des isolierenden Endstücks (7) erstreckt.

5. System zur Erfassung des Verschleißes nach Anspruch 3, dadurch **gekennzeichnet**, daß der Verschleißfühler (3) die Form eines isolierenden Endstücks hat, das im Inneren einen U-förmigen Kanal (16, 17) aufweist, der sich über zwei in derselben Stirnfläche des Endstücks angeordnete Öffnungen (18, 19) nach außen öffnet, wobei dieser Kanal (16, 17) dazu ausgebildet ist, ein elektrisches Kabel (20) aufzunehmen, das durch eine der Öffnungen (18) in das Endstück eintritt und durch die andere Öffnung (19) austritt.

6. System zur Erfassung des Verschleißes nach einem der Ansprüche 1 und 2, dadurch **gekennzeichnet**, daß es eine Verbindungseinrichtung zwischen dem ersten und dem zweiten elektrischen Kabel aufweist, die die Form einer isolierenden Manschette (23) hat, die einen abisolierten Abschnitt des ersten elektrischen Kabels (4) umgibt, der elastisch mit dem abisolierten Ende des zweiten elektrischen Kabels (5) in Berührung gehalten wird.

7. System zur Erfassung des Verschleißes nach Anspruch 6, dadurch **gekennzeichnet**, daß die isolierende Manschette (23) an die abisolierten Abschnitte der ersten und zweiten elektrischen Kabel (4) angeformt ist.

## Claims

1. System for detecting the wear of the friction lining of a disc (2) brake or drum brake of a motor vehicle (1), comprising
- at least two friction lining wear telltales (3; 21) of the type consisting of a hollow plastic insulating end-fitting (7; 13, 14) having an internal cavity for receiving the end of an electrical cable (4; 20a) and able to be worn away in order to make an electrical contact between the said cable (4; 20a) and the disc (2) or the drum of the brake,
- a first electrical cable (4; 20a) electrically connecting the two wear telltales (3; 21),
- a single warning indicator and
- a second electrical cable (5; 20b) connected to the first electrical cable (4; 20a) and extending as far as a connection (6) to the warning indicator.

2. Brake friction lining wear detection system according to Claim 1, characterized in that it comprises a pair of wear telltales (3) each adapted for being installed on a friction lining on either side of a friction disc (2), the first electrical cable (4) having a length long enough to go around the friction disc (2).

3. Wear detection system according to either of Claims 1 and 2, characterized in that it comprises a wear telltale (3) which makes it possible to connect the said second electrical cable (5) to the said first electrical cable (4).

4. Wear detection system according to Claim 3, characterized in that the said wear telltale (3) comprises an insulating end-fitting (7) able to receive the ends of the first (4) and second (5) electrical cables jointly connected to an electrical contact (9) extending inside the insulating end-fitting (7).

5. Wear detection system according to Claim 3, characterized in that the said wear telltale (3) is in the form of an insulating end-fitting having, on the inside, a U-shaped channel (16, 17) which opens to the outside via two orifices (18, 19) located on one and the same face of the end-fitting, this channel (16, 17) being able to receive an electrical cable (20) which enters the end-fitting via one of the orifices (18) and leaves therefrom via the other orifice (19).

6. Wear detection system according to either of Claims 1 and 2, characterized in that it comprises a connection device between the first and second electrical cables, which is in the form of an insulating sleeve (23) covering a stripped portion of the first electrical cable (4) and held in elastic contact with the stripped end of the second electrical cable (5).

7. Wear detection system according to Claim 6, characterized in that the insulating sleeve (23) is overmoulded over the stripped portions of the first and of the second electrical cables (4).
